# EUROPEAN PATENT SPECIFICATION

(11) **EP 2 614 231 B1**
(45) Date of publication and mention of the grant of the patent: **09.01.2019**
(21) Application number: 11823059.8
(22) Date of filing: 02.09.2011
(51) Int. Cl.: F01N 3/20, B01D 53/94, B01D 53/96

(54) **VEHICLE SCR SYSTEM AND ITS REDUCING AGENT SUPPLYING DEVICE**
FAHRZEUG-SCR-SYSTEM UND REDUKTIONSMITTEL-ZUFÜHRVORRICHTUNG DAFÜR
SYSTÈME SCR DE VÉHICULE ET SON DISPOSITIF D'ALIMENTATION EN AGENT RÉDUCTEUR

(30) Priority: 07.09.2010 CN 201010276503
(43) Date of publication of application: 17.07.2013
(73) Proprietor: Robert Bosch GmbH, 70442 Stuttgart (DE)
(72) Inventor: SHEN, Zhibin, Jiangsu 214028 (CN)
(74) Representative: Hörschler, Wolfram Johannes
(86) International application number: PCT/CN2011/079276
(87) International publication number: WO 2012/031536

(56) References cited:
- CN-A- 1 382 517
- CN-A- 101 069 001
- CN-A- 101 103 185
- CN-A- 101 573 515
- DE-A1-102005 003 583
- DE-A1-102007 047 906
- DE-A1-102007 047 906
- DE-A1-102008 009 650
- US-B1- 6 209 315

## Description

### Technical Field

The invention relates to an SCR (selective catalytic reduction) system for a vehicle, in particular a diesel engine vehicle, and a reducing agent supplying device for the SCR system which is able to induce a backflow of the reducing agent after operation.

### Background Art

Vehicle engine exhaust gases comprise harmful components such as PM, NOx, HC, CO and the like. In recent years, more and more strict emission standards are implemented as a result of the increasing of environmental protection consciousness.

In order to reduce the harmful components in the exhaust gases, on one hand, the engines are subjected to continuous technical refreshments and improvements so that the emission amount of the harmful gases from the engines is decreased, and on the other hand, as a more effective solution, suitable post-treatment techniques are selected to reduce the emission amount of the harmful gases from the engines.

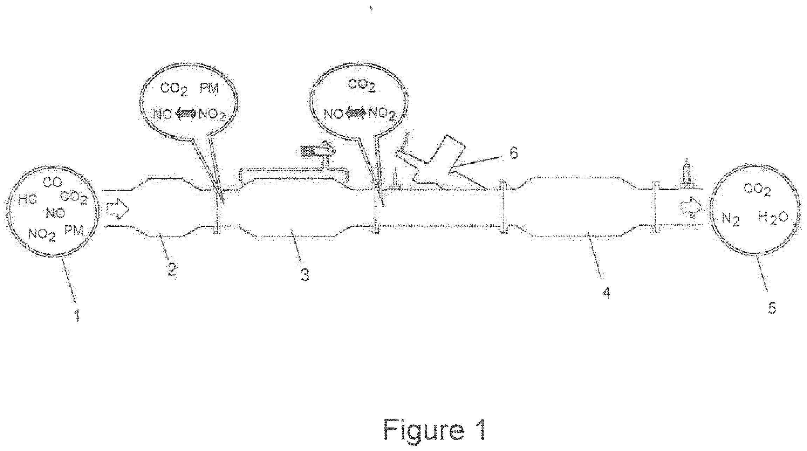

In a known engine exhaust gas post-treatment system, as shown in Figure 1, an OXI module 2, a DPF module 3 and an SCR module 4 are disposed in serial in the flow direction of engine exhaust gases 1. The engine exhaust gases 1, after passing through these modules in sequence, discharge from an exhaust pipe in the form of pipe exhaust gases 5.

The OXI module 2 is configured to effectively reduce the levels of HC and CO in the exhaust gases.

The DPF module 3 is configured to effectively reduce the amount of PM (particulates) in the exhaust gases.

The SCR module 4 is configured to reduce the amount of NOx in the exhaust gases by more than 50% by a selective catalytic reduction process. In a common SCR module 4, there is provided with a urea (for example, AdBlue) supplying module which comprises an injecting assembly 6. Urea solution injected from the injecting assembly 6 in a precise amount is decomposed under high temperature to generate NH₃ which functions as a reducing agent. The following reactions occur between NOx in the exhaust gases and NH₃:

4NH₃+4NO+O₂→4N₂+6H₂O

2NH₃+NO+NO₂→2N₂+3H₂O

8NH₃+6NO₂->7N₂+12H₂O

Thus, after the engine exhaust gases 1 pass through the engine exhaust gas post-treatment system, the ultimately discharged exhaust gases 5 from the exhaust pipe comprise non-harmful CO₂, N₂ and H₂O. It can be understood that, although the pipe exhaust gases 5 schematically shown in Figure 1 do not comprise PM, NOx, HC, CO and other harmful components, it does not mean that are absolutely no harmful components.

Rather, harmful components still exist but their amounts are reduced to degrees that meet the requirement of the emission standards.

An SCR system composed of an SCR module 4 and a urea supplying module has many advantages. For example, NOx removing rate is high, fuel consumption can be lowered, engine oil service life can be prolonged, and higher emission standards can be met through technical refreshing. Further, the costs for manufacturing, assembling and operating the SCR system are low for the reasons that the structure of the SCR system does not comprise any expensive metal, the SCR system can be added into an existing vehicle exhaust system as a unitary part, and urea which is cheap is used for generating the reducing agent.

The urea supplying module draws urea solution (for example, AdBlue) from a urea tank, creates a predetermined pressure in the urea solution, transfers the urea solution to the injecting assembly 6, and then injects the urea solution into the exhaust gas flow which is to be guided into the SCR module 4. In order to achieve the above mentioned reactions between NH₃ and exhaust gases 1 precisely, the urea supplying module is required to have a high precise urea discharge amount. Thus, the urea supplying module forms a key member in the SCR system.

Document DE 10 2008 009 650 A1 discloses a reducing agent supplying device for a vehicle SCR system. The system comprises a tank configured for storing the reducing agent, a pump connected with the tank via a suction line, and an injecting assembly connected with the pump via a pressure line.

Document DE 10 2007 047 906 A1 discloses an exhaust gas treatment system for a combustion engine. The system comprises a tank configured for storing the reducing agent, a pump arranged within the tank, and an injecting assembly connected with the pump via a pressure line.

However, the SCR system may become malfunctioned in the condition that the urea is crystallized or frozen under low temperature inside the urea supplying module, especially inside its pressure lines, because the temperature of the exhaust system is lowered after the operation of the engine. For this end, specific solutions, such as evacuating the urea supplying module after the operation of the engine, should be adopted for accounting for this problem.

Current solutions for evacuating a urea supplying module after the operation of the engine mainly include: 1) using an electrically controlled backflow valve or a bi-directional valve to achieve evacuation, and 2) using supplementary compressed air to achieve evacuation.

However, in the above solution 1), it needs many controlling elements, while in the solution 2), it needs supplementary compressed air from the vehicle and a corresponding air source. Thus, the above two solutions are both relatively expensive.

### Summary of Invention

For the above reasons, an object of the invention is to provide a low cost solution for evacuating the urea supplying module after the operation of the engine.

According to an aspect of the invention, a reducing agent supplying device for a vehicle SCR system is provided, which comprises: a tank configured for storing a reducing agent; a pump connected with the tank via a suction line; an injecting assembly connected with the pump via a pressure line and equipped with a metering valve; a backflow element disposed between the upstream chamber of the power accumulator and the suction line; and a power accumulator disposed in the pressure line between the pump and the injecting assembly, wherein the power accumulator comprises a casing, a completely or partially movable partition member dividing an inner volume of the casing into an upstream chamber and a downstream chamber, an elastic member biasing the partition member towards the upstream chamber, and valve means disposed in the partition member, the valve means being able to allow the reducing agent in the upstream chamber to flow into the downstream chamber in a particulate position of the valve means; wherein when the pump is turned on, the reducing agent is fed into the upstream chamber by the pump, and the reducing agent in the upstream chamber overcomes the elastic force of the elastic member and forces the complete or a part of the partition member to move towards the downstream chamber, during which movement the valve means is opened, and thus the reducing agent is allowed to flow through the upstream chamber into the downstream chamber so that the reducing agent is fed to the injecting assembly through the pressure line; and when the pump is turned off, the partition member is driven by the elastic member so that the complete or a part of it moves towards the upstream chamber, as a result of which the reducing agent in the pressure line and the injecting assembly is drawn into the downstream chamber, and at least a part of the reducing agent in the upstream chamber flows back to the suction line or the tank through the backflow element.

According to a preferred embodiment of the invention, the reducing agent is a urea solution, such as AdBlue.

According to another preferred embodiment of the invention, the backflow element comprises a pressure control valve which comprises: a first port connected to the upstream chamber of the power accumulator; a valve member which closes the first port in a normal state and opens the first port when subjected to a predetermined pressure of the reducing agent from the first port; a second port connected to the suction line; a reducing agent chamber having a variable volume, the reducing agent chamber being always communicated with the second port and being communicated with the first port only when the valve member is opened; and a movable membrane defining the reducing agent chamber, the movable membrane being biased by the elastic member in a direction of reducing the volume of the reducing agent chamber.

According to another preferred embodiment of the invention, when the pump is turned on, the pressure in the reducing agent chamber becomes a negative pressure so that the movable membrane is forced to move in the direction of reducing the volume of the reducing agent chamber and thus pushes against the valve member to maintain the valve member in a state of closing the first port against the pressure in the first port. When the pump is turned off, the negative pressure in the reducing agent chamber is released so that the pushing force of the movable membrane to the valve member is reduced, and thus the valve member opens the first port by means of the pressure in the first port, as a result of which, the reducing agent from the upstream chamber of the power accumulator flows into the reducing agent chamber through the first port and then flows into the suction line through the second port.

According to another preferred embodiment of the invention, the backflow element further comprises a restrictive valve disposed in parallel with the pressure control valve.

According to another preferred embodiment of the invention, the backflow element further comprises a pressure regulating valve disposed in parallel with the pressure control valve, the pressure regulating valve being in the form of a check valve which allows the reducing agent to flow into the suction line from the upstream chamber of the power accumulator through the pressure regulating valve, but does not allow the reducing agent to flow in a reverse direction.

According to another preferred embodiment of the invention, the backflow element comprises an electromagnetic valve disposed between the upstream chamber of the power accumulator and the suction line.

According to another preferred embodiment of the invention, the partition member is a single-pieced elastic plate.

According to another preferred embodiment of the invention, the partition member comprises a rigid central seat plate and a flexible membrane connected in a sealing manner between the outer periphery of the seat plate and an inner wall of the casing.

According to another preferred embodiment of the invention, the valve means comprises a valve element and a valve hole formed through the seat plate, the valve element comprising a valve plate, a valve stem and a stop, wherein the valve stem is slidably inserted through and substantially perpendicular to the seat plate, the valve plate is fixed to an end of the valve stem on the side of the upstream chamber and is configured to open/close the valve hole, the stop is fixed to another end of the valve stem on the side of the downstream chamber, and the valve plate opens/closes the valve hole by means of the sliding of the valve stem with respect to the seat plate.

According to another preferred embodiment of the invention, the valve means further comprises a valve spring which biases the valve element towards the downstream chamber.

According to another preferred embodiment of the invention, the power accumulator further comprises a valve opening block which is disposed in the downstream chamber in a position facing the stop, and wherein the stop comes into contact with the valve opening block during the movement of the partition member towards the downstream chamber, as a result of which, the valve means is stopped from further moving with the partition member, and thus the valve hole is opened.

According to another preferred embodiment of the invention, the partition member is an assembly composed of a seat plate and an outer partition member, the outer partition member comprising a rigid outer portion fixed to an inner wall of the casing and a truncated cone-shaped elastic inner portion protruded inwardly from the inner periphery of the outer portion, the elastic inner portion defining a central opening and being elastically movable between a first position protruded towards the downstream chamber and a second position protruded towards the upstream chamber, and the outer periphery of the seat plate and the elastic inner portion of the outer partition member cooperatively defining the valve means.

According to another aspect of the invention, a vehicle SCR system is provided which comprises a SCR module and a reducing agent supplying device as described above, the reducing agent supplying device being configured to inject a reducing agent into an engine exhaust gas flow which is to be transferred into the SCR module.

According to a preferred embodiment of the invention, the engine is preferably a diesel engine. However, the SCR system of the invention is basically applicable in engines using any type of fuel.

The reducing agent supplying device according to the invention achieves backflow of the reducing agent after operation by simply connecting a power accumulator in serial in the pressure line. The simple configure has a low cost and helps to achieve easy control of the system. In addition, main components of the reducing agent supplying device can be integrated into a module or assembly which can be mounted between the reducing agent tank and the injecting assembly as a whole. Thus, it is easy to assemble the reducing agent supplying device or to retrofit an existing reducing agent supplying device.

### Brief Description of Drawings

Figure 1 is a schematic view of a current engine exhaust gas post-treatment system.
Figure 2 is a schematic view of a reducing agent supplying device according to an embodiment of the invention.
Figure 3 is a schematic view of a filter according to an embodiment of the invention.
Figure 4 is a schematic view of a power accumulator according to an embodiment of the invention.
Figure 4a is an enlarged schematic view of valve means in the power accumulator shown in Figure 4.
Figure 5 is a schematic view of a pressure control valve according to an embodiment of the invention.
Figures 6 and 7 show the states of the power accumulator and the pressure control valve in an initial stage for filling with reducing agent, respectively.
Figures 8 and 9 show the states of the power accumulator and the pressure control valve in a pressure accumulating stage, respectively.
Figures 10 and 11 show the states of the power accumulator and the pressure control valve in a pressure releasing stage after the operation of the system, respectively.
Figures 12 and 13 show the states of the power accumulator and the pressure control valve in an inertia releasing stage after the operation of the system, respectively.
Figures 14 and 15 show the states of the power accumulator and the pressure control valve in a storage releasing stage after the operation of the system, respectively.
Figure 16 is a schematic view of a reducing agent supplying device according to another embodiment of the invention.
Figure 17 is a schematic view of a reducing agent supplying device according to yet another embodiment of the invention.
Figure 18 is a schematic view of a power accumulator according to another embodiment of the invention.
Figure 19 is a schematic view of a power accumulator according to yet another embodiment of the invention.

### Detailed Description of Preferred Embodiments

Now some preferred embodiments of the invention will be described with reference to the drawings.

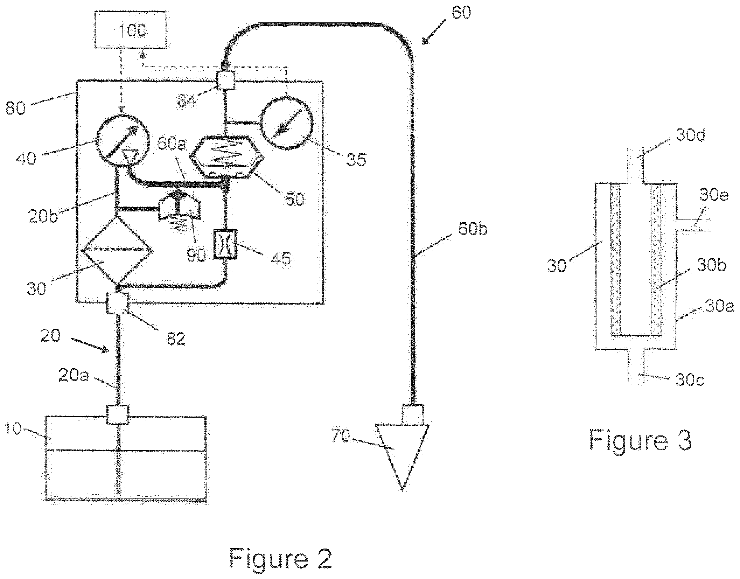

Figure 2 shows a reducing agent supplying device according to an embodiment of the invention configured for injecting a reducing agent into engine exhaust gases in a SCR module of a SCR system with a certain pressure and a metered flow rate. The reducing agent may be a generally used urea solution, such as AdBlue.

The reducing agent supplying device of the invention may be configured in the form of a reducing agent supplying module.

As shown in Figure 2, the reducing agent supplying device mainly comprises: a tank 10 configured for storing a reducing agent; a pump 40, in the form of a flow rate controlling pump in a preferred embodiment, connected with the tank 10 via a suction line 20; a filter 30 disposed in the suction line 20 between the tank 10 and the pump 40 for filtering the reducing agent from the tank 10, the suction line 20 being thus divided into an upperstream suction line 20a between the tank 10 and the filter 30 and a downstream suction line 20b between the filter 30 and the pump 40; an injecting assembly 70 connected with the pump 40 via a pressure line 60, being fed with reducing agent by the pump 40, and being equipped with a metering valve, the injecting assembly 70 being configured to inject the reducing agent into exhaust gases which will flow into the SCR module; a power accumulator 50 disposed in the pressure line 60 between the pump 40 and the injecting assembly 70, the pressure line 60 being thus divided into an upperstream pressure line 60a between the pump 40 and the power accumulator 50 and a downstream pressure line 60b between the power accumulator 50 and the injecting assembly 70; a pressure control valve 90, which is in the form of a membrane type pressure control valve having a temporary storage function in a preferred embodiment, connected between the upperstream pressure line 60a and the downstream suction line 20b; a restrictive valve 45 connected between the upperstream pressure line 60a (or an upperstream port of the power accumulator 50) and the upperstream suction line 20a (or a third port of the filter 30, as described below); a pressure sensor 35 connected to the downstream pressure line 60b for monitoring the pressure in the downstream pressure line 60b; and an electronic control unit (ECU) 100 connected at least to the pressure sensor 35 and the pump 40 for receiving pressure signals from the pressure sensor 35 and controlling the operation of the pump 40.

Preferably, the filter 30, the pressure control valve 90, the restrictive valve 45, the pressure sensor 35, the pump 40, the power accumulator 50 and their corresponding connection lines are all assembled inside a common outer shell 80 to form a sub-module or assembly which can be mounted as a whole between the tank 10 and the injecting assembly 70. The outer shell 80 is provided with an upperstream joint 82 in the suction line 20 (in particular, in the upperstream suction line 20a) and a downstream joint 84 in the pressure line 60 (in particular, in the downstream pressure line 60b).

Figure 3 shows a schematic view of the filter 30 according to an embodiment of the invention. The filter 30 comprises a casing 30a, a filtering medium 30b disposed in the casing 30a, a first port 30c, a second port 30d and an optional third port 30e opened into the casing 30a, the first port 30c and the third port 30e being separated from the second port 30d by the filtering medium 30b, so that the reducing agent from the first port 30c and the third port 30e is filtered by the filtering medium 30b and is then discharged via the second port 30d.

The third port 30e is not always necessary, but can be omitted in some circumstances. For example, in the embodiment described above with reference to Figure 2, the restrictive valve 45 can be connected either to the third port 30e or to the upperstream suction line 20a. In the condition that the restrictive valve 45 is connected to the third port 30e, it is easier to establish a pressure difference on opposite sides of the filtering medium 30b by the reducing agent coming from the restrictive valve 45, and the filtered reducing agent coming from the restrictive valve 45 is more liable to flow through the filtering medium 30b than the un-filtered reducing agent coming from the tank 10. However, it is also possible to connect the restrictive valve 45 to the upperstream suction line 20a. In this condition, the filter 30 does not need the third port 30e, and only the first port 30c and the second port 30d are enough, the first port 30c is connected to the upperstream suction line 20a and the second port 30d is connected to the downstream suction line 20b.

As a variation (not shown), the restrictive valve 45 can be connected to the filter 30, rather than connected to the upperstream suction line 20a. In this condition, the third port 30e is needed for communicating with the restrictive valve 45.

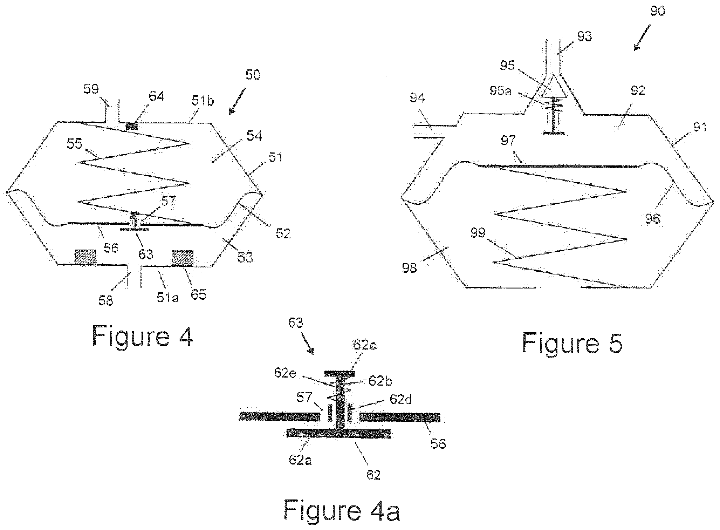

Figure 4 shows an embodiment of the power accumulator 50 of the invention, the power accumulator 50 comprises: a rigid casing 51 which defines an inner volume for receiving the reducing agent coming from the pump 40 and has opposite upperstream and downstream casing surfaces 51a and 51b; a membrane 52 disposed in the casing 51, the membrane 52 being flexible or elastic and being attached to an inner wall of the casing 51 along its outer periphery in a sealing manner; a seat plate 56 attached to the inner periphery or inside a central hole of the membrane 52, the seat plate 56 being in the form of a rigid plate, with the membrane 52 and the seat plate 56 dividing the inner volume of the casing 51 into an upstream chamber 53 and a downstream chamber 54 each having a variable volume, the seat plate 56 being able to move along with the membrane 52 in either one of a direction towards the upstream chamber 53 (the upperstream casing surface 51a) and another direction towards the downstream chamber 54 (the downstream casing surface 51b); an elastic member 55, such as a spring, which is disposed in the downstream chamber 54 and has an end biased against the downstream casing surface 51b and another end biased against the seat plate 56 to bias the seat plate 56 and the membrane 52 towards the upstream chamber 53; and valve means 63, composed mainly of a valve element 62 and a valve hole 57 formed through the seat plate 56, for selectively establishing communication between the upstream chamber 53 and the downstream chamber 54. Except for the location where the valve means 63 is provided, the boundary between the upstream chamber 53 and the downstream chamber 54 is completely sealed and separated by means of the seat plate 56 and the membrane 52.

The power accumulator 50 further comprises an upperstream port 58 formed on the casing 51 and being in communication with the upstream chamber 53, the upperstream port 58 being connected to the upperstream pressure line 60a; and a downstream port 59 formed on the casing 51 and being in communication with the downstream chamber 54, the downstream port 59 being connected to the downstream pressure line 60b.

Figure 4a shows more details of the valve means 63 constructed above. The valve element 62 is slidably disposed in the seat plate 56, for opening/closing the valve hole 57. The valve element 62 comprises a valve plate 62a, a valve stem 62b and a stop 62c formed integrally. The valve stem 62b is slidably inserted through and substantially perpendicular to the seat plate 56. For facilitating the sliding of the valve stem 62b, a guide 62d is fixed in the seat plate 56 for guiding the sliding of the valve stem 62b. The valve plate 62a is fixed to an end of the valve stem 62b inside the upstream chamber 53 and has an area sufficient to cover the valve hole 57. The stop 62c is fixed to another end of the valve stem 62b in the downstream chamber 54 for limiting the moving distance of the valve stem 62b in a direction towards the upstream chamber 53. The valve means 63 further comprises a valve spring 62e, which is a compressive spring in a preferred embodiment, disposed around the valve stem 62b and compressed between the stop 62c and the seat plate 56 (or the guide 62d) for biasing the valve element 62 towards the downstream chamber 54, so that, in a normal state, the valve plate 62a is pushed against the seat plate 56 to close the valve hole 57, or in other words, the valve means 63 is normally closed.

Preferably, the power accumulator 50 further comprises a valve opening block 64 which is disposed on the downstream casing surface 51b in the downstream chamber 54 in a position facing the stop 62c of the valve element 62. When the seat plate 56 is moved towards the downstream casing surface 51b, the valve opening block 64 comes into contact with the stop 62c and stops its movement, such that, as seat plate 56 moves further towards the downstream casing surface 51b, the valve plate 62a is forced to leave the seat plate 56, as a result of which, the valve hole 57 is opened and thus communication is established between the upstream chamber 53 and the downstream chamber 54.

It can be understood that the valve opening block 64 is not always necessary. For example, in the condition that the valve stem 62b is long enough, the valve opening block 64 can be omitted, and the valve hole 57 opens when the downstream casing surface 51b directly contacts and stops the stop 62c.

Preferably, the power accumulator 50 further comprises a seat plate stop 65 which is disposed on the upperstream casing surface 51a in the upstream chamber 53 in a position facing the seat plate 56, for limiting the moving space of the seat plate 56, or the moving distance of it towards the upperstream casing surface 51a. It can be understood that the seat plate stop 65 is not always necessary. For example, the moving space of the seat plate 56 can alternatively be limited by a feature designed on the upperstream casing surface 51a.

Figure 5 shows an embodiment of the pressure control valve 90 of the invention. The pressure control valve 90 is preferably a membrane type pressure control valve having a temporary storage function and comprises: a rigid casing 91; a first port 93 formed on the casing 91 and connected to the upperstream pressure line 60a; a second port 94 formed on the casing 91 and connected to the downstream suction line 20b; a valve member 95, which closes the first port 93 by means of the pushing force of a valve spring 95a in a normal state and opens the first port 93 against the pushing force of the valve spring 95a when it is subjected to a predetermined pressure of the reducing agent coming from the first port 93; a membrane 96 disposed in the casing 91, the membrane 96 being flexible or elastic and being attached along its outer periphery to an inner wall of the casing 91; a seat plate 97 attached to the inner periphery or inside a central hole of the membrane 96, the seat plate 97 being in the form of a rigid plate, the membrane 96 and the seat plate 97 defining a reducing agent chamber 92 and an elastic member chamber 98 in the casing 91 which are completely separated form each other, the reducing agent chamber 92 is communicated with the first port 93 and the second port 94 and has a variable volume for temporarily storing the reducing agent; and an elastic member 99, such as a spring, disposed in the elastic member chamber 98, for biasing the seat plate 97 in a direction towards the reducing agent chamber 92.

The operation of the reducing agent supplying device described above with reference to Figure 2 will be described now.

Before the operation of the system, in the power accumulator 50, the seat plate 56 is biased by the elastic member 55 against the seat plate stop 65, and the valve means 63 is closed under the action of the valve spring 62e. Meantime, in the pressure control valve 90, the elastic member 99 biases the seat plate 97 in a direction towards the reducing agent chamber 92, the reducing agent chamber 92 has its minimum volume, and the seat plate 97 is pushed against the valve member 95, so that the first port 93 is closed by the valve member 95.

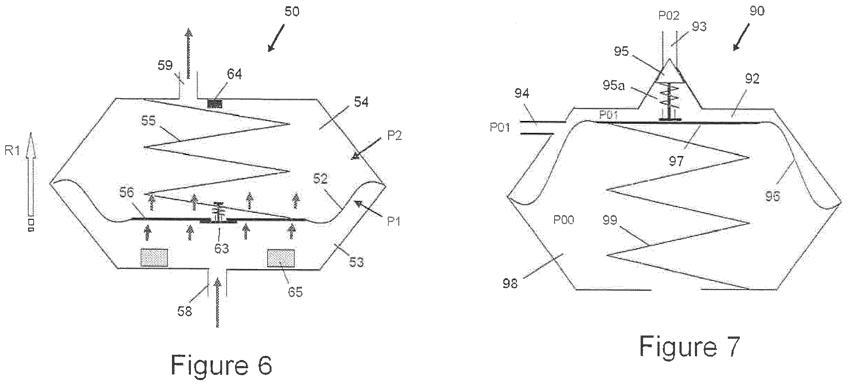

When the system is put into operation, the ECU 100 also activates the pump 40 which draws reducing agent via the suction line 20 from the tank 10. The reducing agent is filtered by the filter 30 in the suction line 20, and then flows into the pump 40. The reducing agent, after pressurized by the pump 40, is transferred into the upperstream pressure line 60a, and is then drawn into the upstream chamber 53 via the upperstream port 58 of the power accumulator 50, as shown in Figure 6, as a result of which, the reducing agent pressure P1 inside the upstream chamber 53 is increased to be higher than the reducing agent pressure P2 inside the downstream chamber 54, and the seat plate 56, together with the membrane 52, is driven by the reducing agent pressure P1 inside the upstream chamber 53 to move in a direction towards the downstream chamber 54 against the pushing force of the elastic member 55, as shown by the arrow R1 in Figure 6, so that the volume of the upstream chamber 53 increases, and the volume of the downstream chamber 54 decreases. The reducing agent in the downstream chamber 54 flows into the downstream pressure line 60b via the downstream port 59 of the power accumulator 50.

During this stage, as shown in Figure 7, in the pressure control valve 90, a pressure P02 is presented in the first port 93, which is substantially equal to the reducing agent pressure P1 in the upstream chamber 53 of the power accumulator 50; a pressure P00 is presented in the elastic member chamber 98, which is equal to the atmosphere pressure; and a pressure P01 is presented in the second port 94 and the reducing agent chamber 92, which is a negative pressure resulted from the suction of the pump 40, the negative pressure being applied to the seat plate 97 and the membrane 96 to pull them towards the reducing agent chamber 92. Under the combined action of the pushing force of the elastic member 99 and the negative pressure of the reducing agent chamber 92, the seat plate 97 and the membrane 96 are in the farthest position moved towards the reducing agent chamber 92, or in other words, the reducing agent chamber 92 has its minimum volume, and the seat plate 97 is pushed against the valve member 95, so that the first port 93 is closed by the valve member 95 against the pressure P02 in the first port 93.

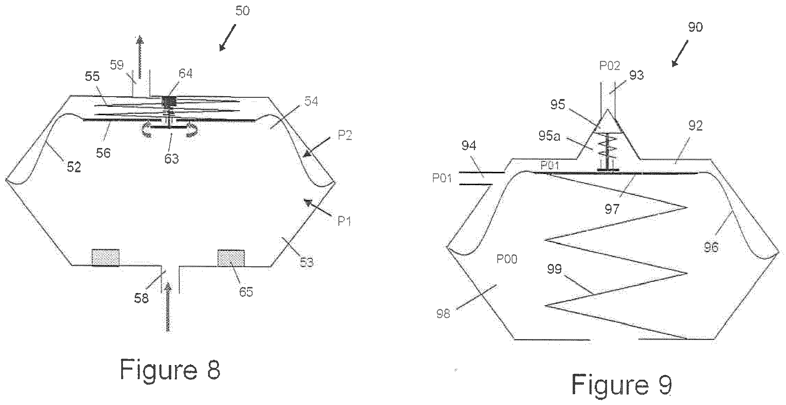

Then, as shown in Figure 8, as the reducing agent pressure P1 inside the upstream chamber 53 further increases and thus the seat plate 56 moves further in the direction towards the downstream chamber 54 together with the membrane 52, the valve opening block 64 comes into contact and stops the stop of the valve means 63, so that the valve means 63 is opened, and the reducing agent in the upstream chamber 53 flows into the downstream chamber 54 through the valve means 63, flows to the injecting assembly 70 through the downstream pressure line 60b, and is then metered and injected. Now, the pressure difference (P1-P2) between the upstream chamber 53 and the downstream chamber 54 comes into an equilibrium state with the pushing force of the elastic member 55, so that the membrane 52 is maintained in a state of being deformed towards the downstream chamber 54, or in other words, in a state that the upstream chamber 53 has an increased volume and the downstream chamber 54 has a decreased volume. The reducing agent from the tank 10 is fed into the SCR module in this way.

During this stage, there is no change in the relations between the three pressures P00, P01 and P02 in the pressure control valve 90, and thus the state of the pressure control valve 90 is not changed, or in other words, the reducing agent chamber 92 is maintained in its minimum volume, and the first port 93 is maintained to be closed by the valve member 95 under the pushing action of the seat plate 97, as shown in Figure 9.

During this stage, a portion of the reducing agent discharged from the pump 40 flows back to the upperstream suction line 20a or the third port 30e of the filter 30 through the restrictive valve 45.

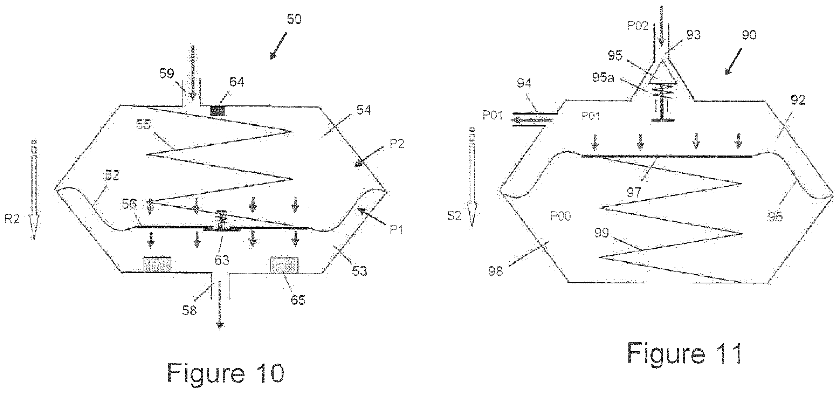

When the operation of the system is finished, the ECU 100 turns off the pump 40, and thus no reducing agent from the tank 10 is fed into the upstream chamber 53 of the power accumulator 50. Now the reducing agent supplying device comes into a pressure releasing stage, as shown in Figure 10, wherein in the power accumulator 50, the reducing agent pressure P1 inside the upstream chamber 53 decreases gradually. In this condition, the pressure difference (P1-P2) between the upstream chamber 53 and the downstream chamber 54 decreases gradually, thus the seat plate 56, together with the membrane 52, is pushed by the elastic member 55 towards the upstream chamber 53 (the upperstream casing surface 51a), as shown by the arrow R2 in Figure 10. In this way, the volume of the upstream chamber 53 decreases, and the volume of the downstream chamber 54 increases. Further, as the valve means 63 leaves the valve opening block 64, the valve means 63 comes into a closed state under the action of its valve spring 62e. The increasing of the volume of the downstream chamber 54 results in that the reducing agent in the downstream pressure line 60b and the injecting assembly 70 is drawn into the downstream chamber 54. The decreasing of the volume of the upstream chamber 53 results in that the reducing agent in the upstream chamber 53 is discharged through the upperstream port 58 of the power accumulator 50.

During this stage, a portion of the reducing agent discharged from the upstream chamber 53 flows back to the upperstream suction line 20a or the third port 30e of the filter 30 through the restrictive valve 45, and then returns back to the tank 10.

Now, as shown in Figure 11, in the pressure control valve 90, as a result of the end of the operation of the pump 40, the pressure P01 presented in the second port 94 and the reducing agent chamber 92 is increased from the negative pressure to a substantially zero pressure, and the pressure P02 in the first port 93 acts on the valve member 95, so that the valve member 95 slightly moves the seat plate 97 against the pushing force of the elastic member 99 towards the side of the elastic member chamber 98, and thus the valve member 95 is opened slightly. In this way, a portion of the reducing agent discharged from the upstream chamber 53 flows into the reducing agent chamber 92 through the first port 93, resulting in increasing of the reducing agent pressure P01 in the reducing agent chamber 92. Under the action of the reducing agent pressure P01 in the reducing agent chamber 92, the seat plate 97, together with the membrane 96, moves in a direction towards the elastic member chamber 98 against the pushing force of the elastic member 99, as shown by the arrow S2 in Figure 11. Then, the valve member 95 comes into a fully opened state under the action of the pressure P02 against the pushing force of the valve spring 95a. In this way, the volume of the reducing agent chamber 92 increases, so that a portion of the reducing agent is stored herein.

Meantime, the reducing agent in the reducing agent chamber 92 flows gradually to the downstream suction line 20b through the second port 94, and then returns back to the tank 10.

In this way, by means of the restrictive valve 45 and the pressure control valve 90, the reducing agent in the upstream chamber 53 of the power accumulator 50 returns back to the tank 10 gradually.

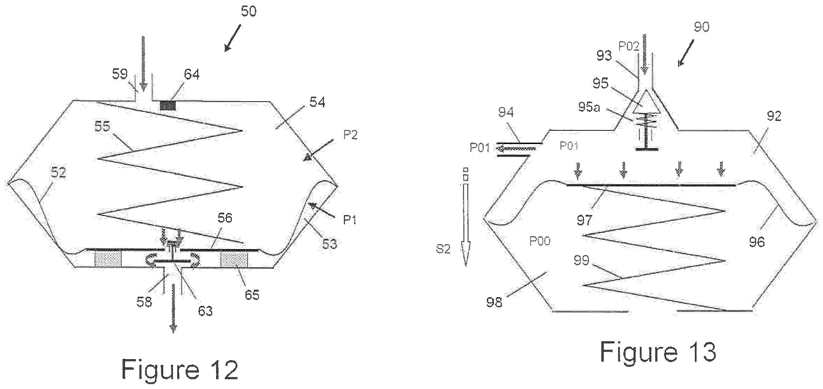

Then, the reducing agent supplying device comes into an inertia releasing stage. As shown in Figure 12, in the power accumulator 50, as the seat plate 56 moves further towards the upperstream casing surface 51a together with the membrane 52, the seat plate 56 is ultimately pushed against the seat plate stop 65 and thus cannot move further towards the upperstream casing surface 51a, while the valve element 62 of the valve means 63 still moves further towards the upperstream casing surface 51a under the inertia force, so that the valve means 63 is partially opened again. Then, under the inertia force of the reducing agent flowing out of the upperstream port 58, a small amount of reducing agent from the downstream chamber 54 will flow into the upstream chamber 53 through the valve means 63.

During this stage, a portion of the reducing agent discharged from the upstream chamber 53 flows back to the upperstream suction line 20a or the third port 30e of the filter 30 through the restrictive valve 45, and then returns back to the tank 10.

Meanwhile, another portion of the reducing agent discharged from the upstream chamber 53 continuously flows into the reducing agent chamber 92 of the pressure control valve 90 through the first port 93, as shown in Figure 13. The seat plate 97, together with the membrane 96, continuously moves in the direction towards the elastic member chamber 98, as shown by the arrow S2 in Figure 13. Meanwhile, the reducing agent in the upstream chamber 53 continuously flows into the downstream suction line 20b through the second port 94.

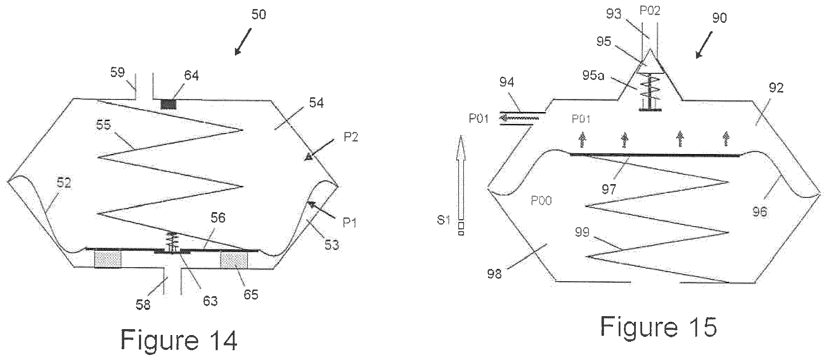

Then, the reducing agent supplying device comes into a storage releasing stage. As shown in Figure 14, in the power accumulator 50, the seat plate 56 is maintained to be pushed by the elastic member 55 against the seat plate stop 65, while the valve means 63 returns back to its closed position. In this way, the volumes of the upstream chamber 53 and the downstream chamber 54 keep unchanged, and there is no reducing agent flowing into or out of the power accumulator 50.

During this stage, as shown in Figure 15, in the pressure control valve 90, there is no reducing agent from the upstream chamber 53 of the power accumulator 50 flowing to the first port 93, and thus, the pressure P02 in the first port 93 decreases, and the valve member 95 closes the first port 93 under the action of the pushing force of the valve spring 95a. Further, as the reducing agent in the reducing agent chamber 92 flows out through the second port 94, the pressure P01 in the reducing agent chamber 92 decreases, and the seat plate 97, together with the membrane 96, moves in the direction towards the reducing agent chamber 92 under the pushing force of the elastic member 99, as shown by the arrow S1 in Figure 15, until the reducing agent chamber 92 reaches its minimum volume.

In this way, the power accumulator 50 forms backflow means in the reducing agent supplying device for feeding back the reducing agent after operation. Once the operation of the system is finished, the backflow means forces the reducing agent in the downstream pressure line 60b and the injecting assembly 70 to flow back to the downstream chamber 54 of the power accumulator 50, while the reducing agent in the upstream chamber 53 of the power accumulator 50 returns back to the suction line 20 and the tank 10 through the restrictive valve 45 and the pressure control valve 90 which act as backflow elements. In this way, no residual reducing agent is left in the downstream pressure line 60b and the injecting assembly 70, and thus no reducing agent is crystallized or frozen inside the downstream pressure line and the injecting assembly 70 which have substantive effects on the metered injection precision.

In addition, during the backflow process of the reducing agent, thanks for the pressure control valve 90, pressure abrupt change in the reducing agent supplying device can be avoided.

The reducing agent supplying device may be further provided with a pressure fluctuation equilibrium function.

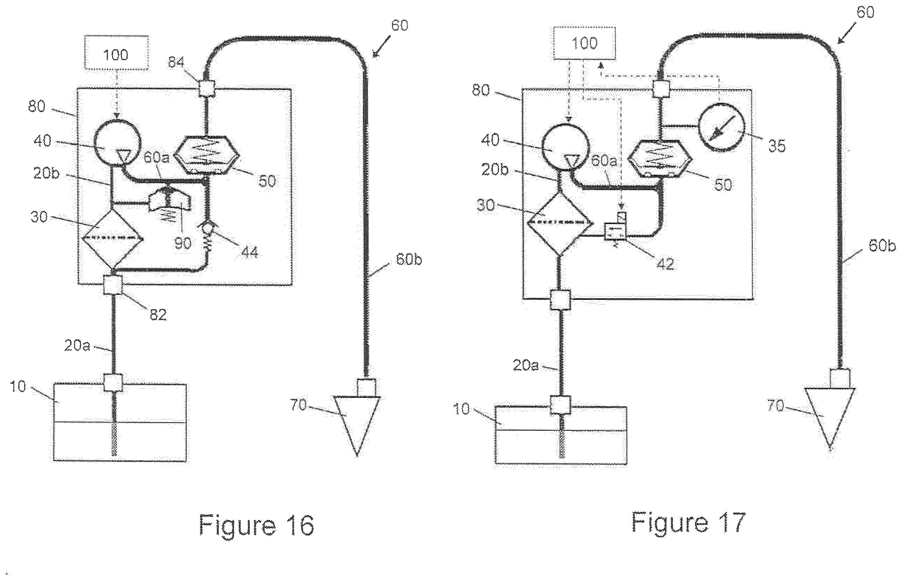

Now a reducing agent supplying device according to another embodiment of the invention will be described with reference to Figure 16. This embodiment is based on the same invention spirit as the embodiment shown in Figure 2, that is, a power accumulator 50 being connected in serial in the pressure line 60. Thus, the same or similar components in the embodiment shown in Figure 16 are designated with the same reference numerals as that in Figure 2, and detailed description to them is omitted.

The embodiment shown in Figure 16 is mainly different with the embodiment shown in Figure 2 in that the above described restrictive valve 45 is substituted with a pressure regulating valve 44. The pressure regulating valve 44 is a check valve which is disposed between the upperstream pressure line 60a (or the upperstream port of the power accumulator 50) and the upperstream suction line 20a, and allows the reducing agent discharged from the upperstream port of the power accumulator 50 to flow towards the upperstream suction line 20a through the pressure regulating valve 44 under a certain pressure, but does not allow flowing reversely. Once the operation of the system is finished, the reducing agent supplying device comes into a pressure releasing stage, wherein a portion of the reducing agent discharged from the upstream chamber 53 and having a certain pressure flows back to the upperstream suction line 20a or the third port 30e of the filter 30 through the pressure regulating valve 44, and then returns back to the tank 10. In the condition that the pressure of the reducing agent discharged from the upstream chamber 53 is not high enough to open the pressure regulating valve 44, the pressure regulating valve 44 is closed, and there is no reducing agent from the upstream chamber 53 flows to the upperstream suction line 20a through the pressure regulating valve 44.

Further, in the embodiment shown in Figure 16, a common pump 40, without flow rate adjusting function, is adopted. It is understood that, in the embodiment shown in Figure 16, a pump 40 having flow rate controlling function can also be adopted.

Furthermore, in the embodiment shown in Figure 16, the pressure sensor 35 described above is omitted. However, in the embodiment shown in Figure 16, a pressure sensor 35 described above can also be adopted.

Other aspects of the structure and operation of the embodiment shown in Figure 16 are similar to that of the embodiment shown in Figure 2, and thus the description to them is omitted.

According to the embodiment shown in Figure 16, in the way describe above, the power accumulator 50 forms backflow means in the reducing agent supplying device for feeding back the reducing agent after operation. Once the operation of the system is finished, the backflow means forces the reducing agent in the downstream pressure line 60b and the injecting assembly 70 to flow back to the downstream chamber 54 of the power accumulator 50, while the reducing agent in the upstream chamber 53 of the power accumulator 50 returns back to the suction line 20 and the tank 10 through the restrictive valve 45 and the pressure control valve 90 which act as backflow elements. In this way, no residual reducing agent is left in the downstream pressure line 60b and the injecting assembly 70, and thus no reducing agent is crystallized or frozen inside the downstream pressure line 60b and the injecting assembly 70 which have substantive effects on the metered injection precision.

The reducing agent supplying device shown in Figure 16 may be further provided with a pressure fluctuation equilibrium function.

Now a reducing agent supplying device according to another embodiment of the invention will be described with reference to Figure 17. This embodiment is based on the same invention spirit as the embodiment shown in Figure 2, that is, a power accumulator 50 being connected in serial in the pressure line 60. Thus, the same or similar components in the embodiment shown in Figure 17 are designated with the same reference numerals as that in Figure 2, and detailed description to them is omitted.

The embodiment shown in Figure 17 is mainly different with the embodiment shown in Figure 2 in that the above described restrictive valve 45 and the pressure control valve 90 are omitted. As a substitution, in the embodiment shown in Figure 17, there is provided with an electromagnetic valve 42 which has an end connected to the upperstream pressure line 60a (or the upperstream port of the power accumulator 50) and another end connected to the upperstream suction line 20a (or the third port of the filter 30). The electromagnetic valve 42 is also controlled by the ECU 100.

Further, in the embodiment shown in Figure 17, a common pump 40, without flow rate adjusting function, is adopted. It is understood that, in the embodiment shown in Figure 17, a pump 40 having flow rate controlling function can also be adopted.

Other aspects of the structure of the embodiment shown in Figure 17 are similar to that of the embodiment shown in Figure 2, and thus the description to them is omitted.

In the embodiment shown in Figure 17, when the system is put into operation, the electromagnetic valve 42 comes into a closed state, and the pump 40 is activated to draw reducing agent from the tank 10. The reducing agent, after pressurized by the pump 40, is fed into the upstream chamber 53 of the power accumulator 50, so that the actions described above with reference to Figures 6 and 8 occur in the power accumulator 50, and the reducing agent is transferred to the injecting assembly 70 and is thus fed into the SCR module.

When the operation of the system is finished, the pump 40 is turned off, and meanwhile, the electromagnetic valve 42 is opened, so that the reducing agent in the upstream chamber 53 of the power accumulator 50 can flow into the upperstream suction line 20a (or the filter 30) through the electromagnetic valve 42. Then, the actions described above with reference to Figures 10, 12 and 14 occur in the power accumulator 50, so that the reducing agent in the downstream pressure line 60b and the injecting assembly 70 is forced to be drawn into the downstream chamber 54 of the power accumulator 50. During this stage, the volume of the upstream chamber 53 decreases, and the reducing agent is discharged through the electromagnetic valve 42 and flows into the upperstream suction line 20a (or the filter 30), and then returns back to the tank 10.

In this way, according to the embodiment shown in Figure 17, in the way describe above, the power accumulator 50 forms backflow means for feeding back the reducing agent after operation. Once the operation of the system is finished, the backflow means forces the reducing agent in the downstream pressure line 60b and the injecting assembly 70 to flow back to the downstream chamber 54 of the power accumulator 50 through the electromagnetic valve 42 which functions as a backflow element, without any residual reducing agent being left in the downstream pressure line 60b and the injecting assembly 70.

The power accumulator 50 described above with reference to for example Figure 4 is only one of the power accumulators that can be used in the invention, and any other power accumulators that can achieve volume change for the upstream chamber 53 and the downstream chamber 54 in responsive to the change of the pressure of the reducing agent in the upstream chamber 53 can also be used. Some other exemplary structures of the power accumulator 50 will be described now.

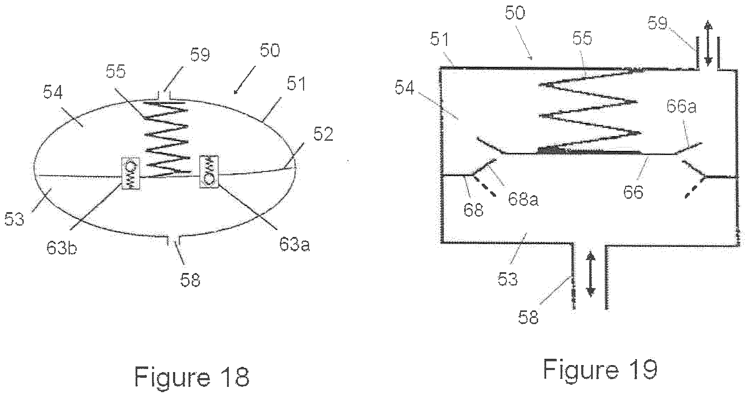

Figure 18 illustrates a possible embodiment of the power accumulator 50. As shown in Figure 18, the power accumulator 50 comprises: a casing 51 which is rigid in this embodiment and defines an inner volume for receiving the reducing agent coming from the pump 40; an elastically or flexibly deformable membrane 52 disposed in the casing 51 and dividing the inner volume of the casing into an upstream chamber 53 and a downstream chamber 54, each having a variable volume; an elastic member 55, such as a spring, disposed in the downstream chamber 54 and having an end biased against the casing 51 and another end pushing the membrane 52 towards the upstream chamber 53; check valve means 63a disposed in the membrane 52 and configured to be opened under a certain opening pressure to allow the reducing agent in the upstream chamber 53 to flow into the downstream chamber 54 irreversibly; optional check valve means 63b disposed in an orientation reverse to the check valve means 63a in the membrane 52 and configured to be opened under a certain opening pressure to allow the reducing agent in the downstream chamber 54 to flow into the upstream chamber 53 irreversibly; an upperstream port 58 configured to be connected with an upperstream pressure line 60a; and a downstream port 59 configured to be connected with a downstream pressure line 60b.

The check valve means 63a and 63b, in combination, function like the valve means 63 in the power accumulator 50 as described above with reference to Figure 4.

Except for the locations where the check valve means 63a and 63b are provided, the boundary between the upstream chamber 53 and the downstream chamber 54 is completely sealed and separated.

It is understood that, the power accumulator 50 shown in Figure 18 has substantially the same function with the power accumulator 50 shown in Figure 4, and can also be used in the reducing agent supplying device of the invention as described above.

Figure 19 shows a power accumulator 50 according to yet another embodiment of the invention, the power accumulator comprising: a rigid casing 51 which defines an inner volume for receiving the reducing agent coming from the pump 40; partition members disposed in the casing 51 and cooperatively dividing the inner volume into an upstream chamber 53 and a downstream chamber 54, each having a variable volume, the partition members comprising two separate members, i.e., a seat plate 66 and an outer partition member 68, the seat plate 66 having a rigid central plate portion and a rigid or elastic truncated cone-shaped outer periphery portion 66a attached to the outer peripheral edge of the central plate portion and extending towards the downstream chamber 54, and the outer partition member 68 having a rigid outer portion fixed to the inner wall of the casing 51 and an elastic truncated cone-shaped inner periphery portion 68a extending from the inner peripheral edge of the rigid outer portion, the inner periphery portion 68a defining a central opening and being able to elastically move or swing between a position protruding towards the downstream chamber 54 as shown by solid lines in Figure 19 and a position protruding towards the upstream chamber 53 as shown by dashed lines in Figure 19; an elastic member 55, such as a spring, disposed in the downstream chamber 54 and having an end biased against the casing 51 and another end pushing the seat plate 66 towards the upstream chamber 53; an upperstream port 58 configured to be connected with an upperstream pressure line 60a; and a downstream port 59 configured to be connected with a downstream pressure line 60b.

According to the power accumulator 50 shown in Figure 19, in the condition that the pressure difference between the upstream chamber 53 and the downstream chamber 54 is zero or very small, the seat plate 66 is pushed by the elastic member 55 to move towards the upstream chamber 53, until the outer periphery portion 66a of the seat plate 66 is pushed against the inner periphery portion 68a of the outer partition member 68 which is now in the position protruding towards the upstream chamber 53 as shown by dashed lines in Figure 19, so that the volume of the upstream chamber 53 decreases, and the volume of the downstream chamber 54 increases. Now a valve hole defined by the central opening of the inner periphery portion 68a is closed by the outer periphery portion 66a of the seat plate 66.

When the system is put into operation, the reducing agent is fed into the upstream chamber 53. As the pressure of the reducing agent in the upstream chamber 53 increases, the outer periphery portion 66a of the seat plate 66 and the inner periphery portion 68a of the outer partition member 68 are forced by the reducing agent in the upstream chamber 53 to move towards the downstream chamber 54 against the elastic member 55, so that the volume of the upstream chamber 53 increases, and the volume of the downstream chamber 54 decreases. The reducing agent in the downstream chamber 54 is discharged through the downstream port 59. Once the inner periphery portion 68a of the outer partition member 68 reaches the position protruding towards the downstream chamber 54 as shown by solid lines in Figure 19, as the seat plate 66 moves further towards the downstream chamber 54, the outer periphery portion 66a leaves the inner periphery portion 68a, so that the valve hole in the inner periphery portion 68a is opened, which allows the reducing agent in the upstream chamber 53 to flow into the downstream chamber 54 through the valve hole.

When the operation of the system is finished, there is no reducing agent to be fed into the upstream chamber 53 of the power accumulator 50. The pressure of the reducing agent in the upstream chamber 53 decreases gradually. In this condition, the pressure difference between the upstream chamber 53 and the downstream chamber 54 decreases gradually, and the seat plate 66 is thus pushed by the elastic member 55 to move towards the upstream chamber 53, so that the inner periphery portion 68a is driven by the outer periphery portion 66a to elastically move or swing towards the upstream chamber 53 and finally reaches the position protruding towards the upstream chamber 53 as shown by dashed lines in Figure 19. In this way, the volume of the upstream chamber 53 is decreased, and the volume of the downstream chamber 54 is increased. During the movement of the seat plate 66, the valve hole in the inner periphery portion 68a keeps closed, and the increasing of the volume of the downstream chamber 54 results in that the reducing agent in the downstream pressure line 60b connected therewith and the injecting assembly 70 is drawn into the downstream chamber 54. After reading the above description, a skilled in the art can design other structures for the power accumulator 50. For example, a partition member in the form of a rigid piston can also be used. In summary, any partition member which presents a complete or partial, rigid or elastic, movement or deformation, in responsive to the pressure change of the reducing agent in the upstream chamber, to achieve volume change of the upstream chamber and the downstream chamber can be used.

The invention also relates to a vehicle SCR system which comprises a SCR module and a reducing agent supplying device as described above, the reducing agent supplying device injecting a reducing agent into an engine exhaust gas flow which is to be transferred into the SCR module. The vehicle SCR system of the invention is preferably used in a diesel engine, but is also applicable in engines using other type of fuels.

The reducing agent supplying device according to the invention achieves backflow of the reducing agent after operation by simply connecting a power accumulator 50 in serial in the pressure line 60. The simple configure has a low cost and helps to achieve easy control of the system. In addition, main components of the reducing agent supplying device can be integrated into a module or assembly which can be mounted between the reducing agent tank and the injecting assembly as a whole. Thus, it is easy to assemble the reducing agent supplying device or to retrofit an existing reducing agent supplying device.

## Claims

1. A reducing agent supplying device for a vehicle SCR system, comprising:
a tank (10) configured for storing a reducing agent;
a pump (40) connected with the tank (10) via a suction line (20);
an injecting assembly (70) connected with the pump (40) via a pressure line (60) and equipped with a metering valve;
**characterized in that** the reducing agent supplying device further comprises:
a power accumulator (50) disposed in the pressure line (60) between the pump (40) and the injecting assembly (70), wherein the power accumulator (50) comprises a casing (51),
a completely or partially movable partition member dividing an inner volume of the casing (51) into an upstream chamber (53) and a downstream chamber (54), an elastic member (55) biasing the partition member towards the upstream chamber (53), and valve means (63) disposed in the partition member, the valve means (63) being able to allow the reducing agent in the upstream chamber (53) to flow into the downstream chamber (54) in a particulate position of the valve means (63);
a backflow element disposed between the upstream chamber (53) of the power accumulator (50) and the suction line (20);
wherein when the pump (40) is turned on, the reducing agent is fed into the upstream chamber (53) by the pump (40), and the reducing agent in the upstream chamber (53) overcomes the elastic force of the elastic member and forces the complete or a part of the partition member to move towards the downstream chamber (54), during which movement the valve means (63) is opened, and thus the reducing agent is allowed to flow through the upstream chamber (53) into the downstream chamber (54) so that the reducing agent is fed to the injecting assembly (70) through the pressure line (60); and
when the pump (40) is turned off, the partition member is driven by the elastic member (55) so that the complete or a part of it moves towards the upstream chamber (53), as a result of which the reducing agent in the pressure line (60) and the injecting assembly (70) is drawn into the downstream chamber (54), and
at least a part of the reducing agent in the upstream chamber (53) flows back to the suction line (20) or the tank (10) through the backflow element.

2. The reducing agent supplying device of claim 1, wherein the reducing agent is a urea solution, such as AdBlue.

3. The reducing agent supplying device of claim 1 or 2, wherein the backflow element comprises a pressure control valve (90) which comprises:
a first port (93) connected to the upstream chamber (53) of the power accumulator (50);
a valve member (95) which closes the first port (93) in a state of closing and opens the first port (93) when subjected to a predetermined pressure of the reducing agent from the first port (93);
a second port (94) connected to the suction line (20);
a reducing agent chamber (92) having a variable volume, the reducing agent chamber (92) being always communicated with the second port (94) and being communicated with the first port (93) only when the valve member (95) is opened; and
a movable membrane (96) defining the reducing agent chamber (92), the movable membrane (96) being biased by an elastic member (99) in a direction of reducing the volume of the reducing agent chamber (92).

4. The reducing agent supplying device of claim 3, wherein when the pump (40) is turned on, the pressure in the reducing agent chamber (92) becomes a negative pressure so that the movable membrane (96) is forced to move in the direction of reducing the volume of the reducing agent chamber (92) and thus pushes against the valve member (95) to maintain the valve member (95) in a state of closing the first port (93) against the pressure in the first port (93).

5. The reducing agent supplying device of claim 3 or 4, wherein when the pump (40) is turned off, the negative pressure in the reducing agent chamber (92) is released so that the pushing force of the movable membrane (96) to the valve member (95) is reduced, and thus the valve member (95) opens the first port (93) by means of the pressure in the first port (93), as a result of which, the reducing agent from the upstream chamber (53) of the power accumulator (50) flows into the reducing agent chamber (92) through the first port (93) and then flows into the suction line (20) through the second port (94).

6. The reducing agent supplying device of any one of claims 3 to 5, wherein the backflow element further comprises a restrictive valve (45) disposed in parallel with the pressure control valve (90).

7. The reducing agent supplying device of any one of claims 3 to 5, wherein the backflow element further comprises a pressure regulating valve (44) disposed in parallel with the pressure control valve (90), the pressure regulating valve (44) being in the form of a check valve which allows the reducing agent to flow into the suction line (20) from the upstream chamber (53) of the power accumulator (50) through the pressure regulating valve (44), but does not allow the reducing agent to flow in a reverse direction.

8. The reducing agent supplying device of claim 1, wherein the backflow element comprises an electromagnetic valve (42) disposed between the upstream chamber (53) of the power accumulator (50) and the suction line (20).

9. The reducing agent supplying device of any one of claims 1 to 8, wherein the partition member is a single-pieced elastic plate (56).

10. The reducing agent supplying device of any one of claims 1 to 8, wherein the partition member comprises a rigid central seat plate (56) and a flexible membrane (52) connected in a sealing manner between the outer periphery of the seat plate (56) and an inner wall of the casing (51).

11. The reducing agent supplying device of claim 10, wherein the valve means (63) comprises a valve element (62) and a valve hole (57) formed through the seat plate (56), the valve element (62) comprising a valve plate (62a), a valve stem (62b) and a stop (62c), wherein the valve stem (62b) is slidably inserted through and substantially perpendicular to the seat plate (56), the valve plate (62a) is fixed to an end of the valve stem (62b) on the side of the upstream chamber (53) and is configured to open/close the valve hole (57), the stop (62c) is fixed to another end of the valve stem (62b) on the side of the downstream chamber (54), and the valve plate (62a) opens/closes the valve hole (57) by means of the sliding of the valve stem (62b) with respect to the seat plate (56).

12. The reducing agent supplying device of claim 11, wherein the valve means (63) further comprises a valve spring (62e) which biases the valve element (62) towards the downstream chamber (54).

13. The reducing agent supplying device of claim 12, wherein the power accumulator (50) further comprises a valve opening block (64) which is disposed in the downstream chamber (54) in a position facing the stop (62c), and wherein the stop (62c) comes into contact with the valve opening block (64) during the movement of the partition member towards the downstream chamber (54), as a result of which, the valve means (63) is stopped from further moving with the partition member, and thus the valve hole (57) is opened.

14. The reducing agent supplying device of any one of claims 1 to 8, wherein the partition member is an assembly composed of a seat plate (66) and an outer partition member (68), the outer partition member (68) comprising a rigid outer portion fixed to an inner wall of the casing (51) and a truncated cone-shaped elastic inner portion (68a) protruded inwardly from the inner periphery of the outer portion, the elastic inner portion (68a) defining a central opening and being elastically movable between a first position protruded towards the downstream chamber (54) and a second position protruded towards the upstream chamber (53), and the outer periphery of the seat plate (66) and the elastic inner portion (68a) of the outer partition member cooperatively defining the valve means (63).

15. A vehicle SCR system comprising a SCR module and a reducing agent supplying device of any one of claims 1 to 14, the reducing agent supplying device being configured to inject a reducing agent into an engine exhaust gas flow which is to be transferred into the SCR module.

16. The vehicle SCR system of claim 15, wherein the engine is a diesel engine.

## Patentansprüche

1. Reduktionsmittel-Zuführvorrichtung für ein Fahrzeug-SCR-System, die Folgendes umfasst:
einen Behälter (10), der zum Speichern eines Reduktionsmittels ausgelegt ist;
eine Pumpe (40), die über eine Saugleitung (20) mit dem Behälter (10) verbunden ist;
eine Einspritzvorrichtung (70), die über eine Druckleitung (60) mit der Pumpe (40) verbunden und mit einem Messventil ausgestattet ist;
**dadurch gekennzeichnet, dass** die Reduktionsmittel-Zuführvorrichtung ferner Folgendes umfasst:
einen Energieakkumulator (50), der in der Druckleitung (60) zwischen der Pumpe (40) und der Einspritzvorrichtung (70) angeordnet ist, wobei der Energieakkumulator (50) ein Gehäuse (51) umfasst,
ein vollständig oder teilweise bewegbares Teilungselement, das ein inneres Volumen des Gehäuses (51) in eine vorgelagerte Kammer (53) und eine nachgelagerte Kammer (54) teilt, wobei ein elastisches Element (55) das Teilungselement in Richtung der vorgelagerten Kammer (53) vorspannt, und ein Ventilmittel (63) in dem Teilungselement angeordnet ist, wobei das Ventilmittel (63) in der Lage ist, dem Reduktionsmittel in der vorgelagerten Kammer (53) zu gestatten, in einer bestimmten Position des Ventilmittels (63) in die nachgelagerte Kammer (54) zu strömen;
ein Rückströmelement, das zwischen der vorgelagerten Kammer (53) des Energieakkumulators (50) und der Saugleitung (20) angeordnet ist;
wobei dann, wenn die Pumpe (40) eingeschaltet wird, das Reduktionsmittel von der Pumpe (40) in die vorgelagerte Kammer (53) gefördert wird, und das Reduktionsmittel in der vorgelagerten Kammer (53) die elastische Kraft des elastischen Elements überwindet und das gesamte oder einen Teil des Teilungselements zwingt, sich in Richtung der nachgelagerten Kammer (54) zu bewegen, wobei während dieser Bewegung das Ventilmittel (63) geöffnet und folglich dem Reduktionsmittel gestattet wird, durch die vorgelagerte Kammer (53) in die nachgelagerte Kammer (54) zu strömen, sodass das Reduktionsmittel durch die Druckleitung (60) in die Einspritzvorrichtung (70) gefördert wird; und
dann, wenn die Pumpe (40) ausgeschaltet ist, das Teilungselement von dem elastischen Element (55) so angetrieben wird, dass es sich vollständig oder mit einem Teil in Richtung der vorgelagerten Kammer (53) bewegt, wobei ein Ergebnis davon darin besteht, dass das Reduktionsmittel in der Druckleitung (60) und der Einspritzvorrichtung (70) in die nachgelagerte Kammer (54) gezogen wird, und mindestens ein Teil des Reduktionsmittels in der vorgelagerten Kammer (53) durch das Rückströmelement zurück zu der Saugleitung (20) oder dem Behälter (10) strömt.

2. Reduktionsmittel-Zuführvorrichtung nach Anspruch 1, wobei das Reduktionsmittel eine Harnstofflösung ist, wie beispielsweise AdBlue.

3. Reduktionsmittel-Zuführvorrichtung nach Anspruch 1 oder 2, wobei das Rückströmelement ein Druckregelventil (90) umfasst, das Folgendes umfasst:
einen ersten Anschluss (93), der mit der vorgelagerten Kammer (53) des Energieakkumulators (50) verbunden ist;
ein Ventilelement (95), das den ersten Anschluss (93) in einem Status des Schließens schließt und den ersten Anschluss (93) öffnet, wenn er einem vorbestimmten Druck des Reduktionsmittels von dem ersten Anschluss (93) ausgesetzt ist;
einen zweiten Anschluss (94), der mit der Saugleitung (20) verbunden ist;
eine Reduktionsmittelkammer (92) mit einem variablen Volumen, wobei die Reduktionsmittelkammer (92) immer mit dem zweiten Anschluss (94) im Austausch steht und nur dann mit dem ersten Anschluss (93) im Austausch steht, wenn das Ventilelement (95) geöffnet ist; und
eine bewegbare Membran (96), welche die Reduktionsmittelkammer (92) definiert, wobei die bewegbare Membran (96) von einem elastischen Element (99) in einer Richtung der Reduzierung des Volumens der Reduktionsmittelkammer (92) vorgespannt ist.

4. Reduktionsmittel-Zuführvorrichtung nach Anspruch 3, wobei dann, wenn die Pumpe (40) eingeschaltet wird, der Druck in der Reduktionsmittelkammer (92) ein negativer Druck wird, sodass die bewegbare Membran (96) gezwungen wird, sich in der Richtung der Reduzierung des Volumens der Reduktionsmittelkammer (92) zu bewegen, und damit eine Schubkraft gegen das Ventilelement (95) ausübt, um das Ventilelement (95) in einem Status des Schließens des ersten Anschlusses (93) gegen den Druck in dem ersten Anschluss (93) zu halten.

5. Reduktionsmittel-Zuführvorrichtung nach Anspruch 3 oder 4, wobei dann, wenn die Pumpe (40) ausgeschaltet wird, der negative Druck in der Reduktionsmittelkammer (92) freigegeben wird, sodass die Schubkraft der bewegbaren Membran (96) auf das Ventilelement (95) reduziert wird und folglich das Ventilelement (95) den ersten Anschluss (93) mittels des Drucks in dem ersten Anschluss (93) öffnet, wobei im Ergebnis dessen das Reduktionsmittel von der vorgelagerten Kammer (53) des Energieakkumulators (50) durch den ersten Anschluss (93) in die Reduktionsmittelkammer (92) strömt und dann durch den zweiten Anschluss (94) in die Saugleitung (20) strömt.

6. Reduktionsmittel-Zuführvorrichtung nach einem der Ansprüche 3 bis 5, wobei das Rückströmelement ferner ein Begrenzungsventil (45) umfasst, das parallel zu dem Druckregelventil (90) angeordnet ist.

7. Reduktionsmittel-Zuführvorrichtung nach einem der Ansprüche 3 bis 5, wobei das Rückströmelement ferner ein Druckregulierventil (44) umfasst, das parallel zu dem Druckregelventil (90) angeordnet ist, wobei das Druckregulierventil (44) die Form eines Rückschlagventils hat, das dem Reduktionsmittel gestattet, von der vorgelagerten Kammer (53) des Energieakkumulators (50) durch das Druckregulierventil (44) in die Saugleitung (20) zu strömen, dem Reduktionsmittel jedoch nicht gestattet, in einer umgekehrten Richtung zu strömen.

8. Reduktionsmittel-Zuführvorrichtung nach Anspruch 1, wobei das Rückströmelement ein elektromagnetisches Ventil (42) umfasst, das zwischen der vorgelagerten Kammer (53) des Energieakkumulators (50) und der Saugleitung (20) angeordnet ist.

9. Reduktionsmittel-Zuführvorrichtung nach einem der Ansprüche 1 bis 8, wobei das Teilungselement eine einteilige elastische Platte (56) ist.

10. Reduktionsmittel-Zuführvorrichtung nach einem der Ansprüche 1 bis 8, wobei das Teilungselement eine starre zentrale Sitzplatte (56) und eine flexible Membran (52) umfasst, die in einer abdichtenden Weise zwischen der äußeren Peripherie der Sitzplatte (56) und einer Innenwand des Gehäuses (51) angeschlossen ist.

11. Reduktionsmittel-Zuführvorrichtung nach Anspruch 10, wobei das Ventilmittel (63) ein Ventilelement (62) und ein Ventilloch (57) umfasst, das durch die Sitzplatte (56) ausgebildet ist, wobei das Ventilelement (62) eine Ventilplatte (62a), einen Ventilschaft (62b) und einen Anschlag (62c) umfasst, wobei der Ventilschaft (62b) verschiebbar durch und im Wesentlichen senkrecht zu der Sitzplatte (56) eingeführt wird, die Ventilplatte (62a) an einem Ende des Ventilschafts (62b) an der Seite der vorgelagerten Kammer (53) befestigt ist, und dazu ausgelegt ist, das Ventilloch (57) zu öffnen/zu schließen, wobei der Anschlag (62c) an einem anderen Ende des Ventilschafts (62b) an der Seite der nachgelagerten Kammer (54) befestigt ist, und die Ventilplatte (62a) das Ventilloch (57) durch Verschieben des Ventilschafts (62b) in Bezug auf die Sitzplatte (56) öffnet/schließt.

12. Reduktionsmittel-Zuführvorrichtung nach Anspruch 11, wobei das Ventilmittel (63) ferner eine Ventilfeder (62e) umfasst, die das Ventilelement (62) in Richtung der nachgelagerten Kammer (54) vorspannt.

13. Reduktionsmittel-Zuführvorrichtung nach Anspruch 12, wobei der Energieakkumulator (50) ferner einen Ventilöffnungsblock (64) umfasst, der in der nachgelagerten Kammer (54) in einer dem Anschlag (62c) zugewandten Position angeordnet ist, und wobei der Anschlag (62c) während der Bewegung des Teilungselements in Richtung der nachgelagerten Kammer (54) in Kontakt mit dem Ventilöffnungsblock (64) kommt, wobei im Ergebnis dessen das Ventilmittel (63) vor einer weiteren Bewegung mit dem Teilungselement angehalten wird und folglich das Ventilloch (57) geöffnet wird.

14. Reduktionsmittel-Zuführvorrichtung nach einem der Ansprüche 1 bis 8, wobei das Teilungselement eine Anordnung ist, die aus einer Sitzplatte (66) und einem äußeren Teilungselement (68) besteht, wobei das äußere Teilungselement (68) einen starren äußeren Abschnitt umfasst, der an einer Innenwand des Gehäuses (51) fixiert ist, und einen abgeschnittenen, kegelförmigen, elastischen inneren Abschnitt (68a), der von der inneren Peripherie des äußeren Abschnitts nach innen vorsteht, wobei der elastische innere Abschnitt (68a) eine mittlere Öffnung definiert und zwischen einer ersten Position, die in Richtung der nachgelagerten Kammer (54) vorsteht, und einer zweiten Position, die in Richtung der vorgelagerten Kammer (53) vorsteht, bewegbar ist, und die äußere Peripherie der Sitzplatte (66) und der elastische innere Abschnitt (68a) des äußeren Teilungselements zusammen das Ventilmittel (63) definieren.

15. Fahrzeug-SCR-System, das ein SCR-Modul und eine Reduktionsmittel-Zuführvorrichtung nach einem der Ansprüche 1 bis 14 umfasst, wobei die Reduktionsmittel-Zuführvorrichtung dazu ausgelegt ist, ein Reduktionsmittel in einen Motor-Abgasstrom einzuspritzen, der in das SCR-Modul zu übertragen ist.

16. Fahrzeug-SCR-System nach Anspruch 15, wobei der Motor ein Dieselmotor ist.

## Revendications

1. Dispositif d'alimentation en agent réducteur pour un système SCR de véhicule, comprenant:
un réservoir (10) configuré de manière à stocker un agent réducteur;
une pompe (40) connectée au réservoir (10) par l'intermédiaire d'une ligne d'aspiration (20);
un ensemble d'injection (70) connecté à la pompe (40) par l'intermédiaire d'une ligne de pression (60) et équipé d'une soupape de dosage;
**caractérisé en ce que** le dispositif d'alimentation en agent réducteur comprend en outre:
un accumulateur de puissance (50) disposé dans la ligne de pression (60) entre la pompe (40) et l'ensemble d'injection (70), dans lequel l'accumulateur de puissance (50) comprend une enceinte (51),
un élément de séparation complètement ou partiellement mobile qui divise un volume intérieur de l'enceinte (51) en une chambre amont (53) et une chambre aval (54), un élément élastique (55) qui pousse l'élément de séparation en direction de la chambre amont (53), et des moyens de soupape (63) disposés dans l'élément de séparation, les moyens de soupape (63) étant capables de permettre à l'agent réducteur dans la chambre amont (53) de s'écouler dans la chambre aval (54) dans une position particulière des moyens de soupape (63);
un élément de refoulement disposé entre la chambre amont (53) de l'accumulateur de puissance (50) et la ligne d'aspiration (20);
dans lequel lorsque la pompe (40) est activée, l'agent réducteur est amené dans la chambre amont (53) par la pompe (40), et l'agent réducteur dans la chambre amont (53) surmonte la force élastique de l'élément élastique et force la totalité ou une partie de l'élément de séparation à se déplacer en direction de la chambre aval (54), déplacement pendant lequel les moyens de soupape (63) sont ouverts, et donc l'agent réducteur est autorisé à s'écouler à travers la chambre amont (53) dans la chambre aval (54) de telle sorte que l'agent réducteur soit amené à l'ensemble d'injection (70) à travers la ligne de pression (60); et
lorsque la pompe (40) est coupée, l'élément de séparation est entraîné par l'élément élastique (55) de telle sorte que la totalité ou une partie de celui-ci se déplace en direction de la chambre amont (53), ce dont il résulte que l'agent réducteur dans la ligne de pression (60) et dans l'ensemble d'injection (70) est aspiré dans la chambre aval (54), et au moins une partie de l'agent réducteur dans la chambre amont (53) est refoulée vers la ligne d'aspiration (20) ou le réservoir (10) à travers l'élément de refoulement.

2. Dispositif d'alimentation en agent réducteur selon la revendication 1, dans lequel l'agent réducteur est une solution d'urée, telle que AdBlue.

3. Dispositif d'alimentation en agent réducteur selon la revendication 1 ou 2, dans lequel l'élément de refoulement comprend une soupape de commande de pression (90) qui comprend:
un premier port (93) connecté à la chambre amont (53) de l'accumulateur de puissance (50);
un élément de soupape (95) qui ferme le premier port (93) dans un état de fermeture et qui ouvre le premier port (93) lorsqu'il est soumis à une pression prédéterminée de l'agent réducteur en provenance du premier port (93);
un second port (94) connecté à la ligne d'aspiration (20);
une chambre d'agent réducteur (92) présentant un volume variable, la chambre d'agent réducteur (92) étant toujours en communication avec le second port (94) et étant en communication avec le premier port (93) uniquement lorsque l'élément de soupape (95) est ouvert; et
une membrane mobile (96) qui définit la chambre d'agent réducteur (92), la membrane mobile (96) étant poussée par un élément élastique (99) dans une direction de réduction du volume de la chambre d'agent réducteur (92).

4. Dispositif d'alimentation en agent réducteur selon la revendication 3, dans lequel lorsque la pompe (40) est activée, la pression dans la chambre d'agent réducteur (92) devient une pression négative de telle sorte que la membrane mobile (96) soit forcée de se déplacer dans la direction de réduction du volume de la chambre d'agent réducteur (92) et exerce donc une poussée contre l'élément de soupape (95) afin de maintenir l'élément de soupape (95) dans un état de fermeture du premier port (93) contre la pression dans le premier port (93).

5. Dispositif d'alimentation en agent réducteur selon la revendication 3 ou 4, dans lequel lorsque la pompe (40) est coupée, la pression négative dans la chambre d'agent réducteur (92) est relâchée de telle sorte que la force de poussée de la membrane mobile (96) sur l'élément de soupape (95) soit réduite, et donc l'élément de soupape (95) ouvre le premier port (93) au moyen de la pression dans le premier port (93), ce dont il résulte que l'agent réducteur en provenance de la chambre amont (53) de l'accumulateur de puissance (50) s'écoule dans la chambre d'agent réducteur (92) à travers le premier port (93) et s'écoule ensuite dans la ligne d'aspiration (20) à travers le second port (94) .

6. Dispositif d'alimentation en agent réducteur selon l'une quelconque des revendications 3 à 5, dans lequel l'élément de refoulement comprend en outre une soupape d'étranglement (45) disposée parallèlement à la soupape de commande de pression (90).

7. Dispositif d'alimentation en agent réducteur selon l'une quelconque des revendications 3 à 5, dans lequel l'élément de refoulement comprend en outre une soupape de régulation de pression (44) disposée parallèlement à la soupape de commande de pression (90), la soupape de régulation de pression (44) se présentant sous la forme d'un clapet de retenue qui permet à l'agent réducteur de s'écouler dans la ligne d'aspiration (20) à partir de la chambre amont (53) de l'accumulateur de puissance (50) à travers la soupape de régulation de pression (44), mais qui ne permet pas à l'agent réducteur de s'écouler dans une direction inverse.

8. Dispositif d'alimentation en agent réducteur selon la revendication 1, dans lequel l'élément de refoulement comprend une soupape électromagnétique (42) disposée entre la chambre amont (53) de l'accumulateur de puissance (50) et la ligne d'aspiration (20).

9. Dispositif d'alimentation en agent réducteur selon l'une quelconque des revendications 1 à 8, dans lequel l'élément de séparation est une plaque élastique d'une seule pièce (56).

10. Dispositif d'alimentation en agent réducteur selon l'une quelconque des revendications 1 à 8, dans lequel l'élément de séparation comprend une plaque de support centrale rigide (56) et une membrane souple (52) connectée d'une manière étanche entre la périphérie extérieure de la plaque de support (56) et une paroi intérieure de l'enceinte (51).

11. Dispositif d'alimentation en agent réducteur selon la revendication 10, dans lequel les moyens de soupape (63) comprennent un élément de soupape (62) et un trou de soupape (57) formé à travers la plaque de support (56), l'élément de soupape (62) comprenant un plaque de soupape (62a), une tige de soupape (62b) et un arrêt (62c), dans lequel la tige de soupape (62b) est insérée de façon coulissante à travers et sensiblement perpendiculairement à la plaque de support (56), la plaque de soupape (62a) est fixée à une extrémité de la tige de soupape (62b) sur le côté de la chambre amont (53) et est configurée de manière à ouvrir/fermer le trou de soupape (57), l'arrêt (62c) est fixé à une autre extrémité de la tige de soupape (62b) sur le côté de la chambre aval (54), et la plaque de soupape (62a) ouvre/ferme le trou de soupape (57) au moyen du coulissement de la tige de soupape (62b) par rapport à la plaque de support (56).

12. Dispositif d'alimentation en agent réducteur selon la revendication 11, dans lequel les moyens de soupape (63) comprennent en outre un ressort de soupape (62e) qui pousse l'élément de soupape (62) en direction de la chambre aval (54).

13. Dispositif d'alimentation en agent réducteur selon la revendication 12, dans lequel l'accumulateur de puissance (50) comprend en outre un bloc d'ouverture de soupape (64) qui est disposé dans la chambre aval (54) dans une position en face de l'arrêt (62c), et dans lequel l'arrêt (62c) entre en contact avec le bloc d'ouverture de soupape (64) pendant le déplacement de l'élément de séparation en direction de la chambre aval (54), ce dont il résulte que tout déplacement supplémentaire des moyens de soupape (63) avec l'élément de séparation est arrêté, et donc que le trou de soupape (57) est ouvert.

14. Dispositif d'alimentation en agent réducteur selon l'une quelconque des revendications 1 à 8, dans lequel l'élément de séparation est un ensemble composé d'une plaque de support (66) et d'un élément de séparation extérieur (68), l'élément de séparation extérieur (68) comprenant une partie extérieure rigide fixée à une paroi intérieure de l'enceinte (51) et une partie intérieure élastique de forme tronconique (68a) qui fait saillie vers l'intérieur à partir de la périphérie intérieure de la partie extérieure, la partie intérieure élastique (68a) définissant une ouverture centrale et étant élastiquement déplaçable entre une première position en saillie en direction de la chambre aval (54) et une seconde position en saillie en direction de la chambre amont (53), et la périphérie extérieure de la plaque de support (66) et la partie intérieure élastique (68a) de l'élément de séparation extérieur définissant en coopération les moyens de soupape (63).

15. Système SCR de véhicule comprenant un module SCR et un dispositif d'alimentation en agent réducteur selon l'une quelconque des revendications 1 à 14, le dispositif d'alimentation en agent réducteur étant configuré de manière à injecter un agent réducteur dans un flux de gaz d'échappement de moteur qui doit être transféré dans le module SCR.

16. Système SCR de véhicule selon la revendication 15, dans lequel le moteur est un moteur diesel.
